# EUROPÄISCHE PATENTSCHRIFT

(11) **EP 0 810 705 B1**
(45) Veröffentlichungstag und Bekanntmachung des Hinweises auf die Patenterteilung: **12.06.2002**
(21) Anmeldenummer: 97810217.6
(22) Anmeldetag: 11.04.1997
(51) Int. Cl.: H02G 5/06

(54) **Isolator**
Isolator
Isolateur

(30) Priorität: 30.05.1996 DE 19621710
(43) Veröffentlichungstag der Anmeldung: 03.12.1997
(73) Patentinhaber: ABB RESEARCH LTD., 8050 Zürich (CH)
(72) Erfinder: Greuter, Felix, Dr., 5406 Baden-Dättwil (CH); Ritzer, Leopold, 5417 Untersiggenthal (CH)
(74) Vertreter: ABB Patent Attorneys

(56) Entgegenhaltungen:
- EP-A- 0 457 081
- DE-A- 3 634 946
- DE-A- 4 007 335
- US-A- 4 418 240

## Beschreibung

### TECHNISCHES GEBIET

Die Erfindung geht aus von einem Isolator gemäss dem Oberbegriff des Anspruchs 1.

### STAND DER TECHNIK

Aus der Patentschrift EP 0 457 081 B1 ist ein aus Epoxidharz gegossener, scheibenförmig ausgebildeter Isolator bekannt, der mit Steuerelektroden aus einem leitenden Epoxidharz versehen ist. Dieser Isolator wird in metallgekapselten, mit SF₆-Gas isolierten Schaltanlagen eingesetzt, um die spannungsbeaufschlagten Aktivteile der Hochspannungsanlage gegen die Metallkapselung abzustützen. Der Isolatorkörper kann jedoch auch mit einem anderen Druckmittel beaufschlagt werden, wie beispielsweise Mineralöl oder andere Isoliergase oder Gasmischungen, ferner könnte der Isolatorkörper auch mit einem Vakuum beaufschlagt werden. Dieser als Stützisolator ausgebildete Isolator weist einen metallischen Aussenring auf, der zwischen zwei Anschlussflansche der Metallkapselung der gasisolierten Schaltanlage eingespannt wird. Der Isolatorkörper besteht hier aus einem gehärteten Giessharz. Die Feldsteuerelemente sind als Elektroden aus elektrisch leitfähigem Kunststoff ausgebildet, welche auf dem Potential der jeweils angrenzenden Metallteile liegen.

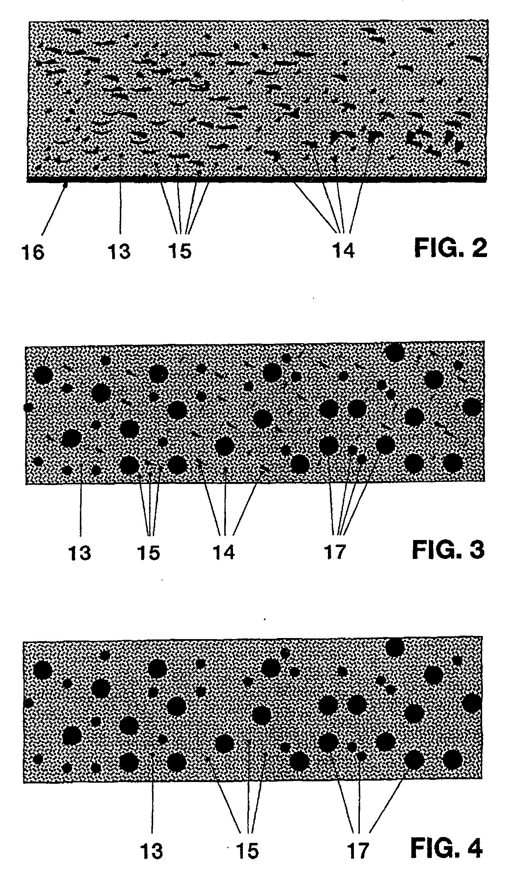

Für die Herstellung dieser jeweils mit den entsprechenden Metallteilen elektrisch leitend verbundenen Elektroden wird in der Regel ein Giessvorgang benutzt. Nacheinander werden sowohl die Eingussarmatur als auch der Aussenring mit der jeweiligen Elektrode versehen und erst danach wird mit Hilfe eines dritten Giessvorgangs der eigentliche Isolatorkörper zwischen die beiden elektrisch leitfähigen Elektroden eingebracht. Bei der Ausführungsform des Stützisolators gemäss Fig.3 der erwähnten Patentanmeldung wird im Bereich der metallischen Kapselung der Hochspannungsanlage ein vorgegossenes ringförmiges Feldsteuerelement mit einem kreisförmigen Querschnitt in den Isolatorkörper eingegossen. Dieses Feldsteuerelement enthält elektrisch leitfähigen Kunststoff und grenzt allseits mit einer konvexen Oberfläche an den Isolatorkörper an. Am Feldsteuerelement sind Halteteile aus leitfähigem Material, wie Metall oder elektrisch leitendem Kunststoff, angebracht, mit denen das Feldsteuerelement beim Herstellen des Isolators in der Giessform fixiert wird und welche beim Einbau des Isolators in die gasisolierte Schaltanlage mit den beiden Anschlussflanschen kontaktiert werden, wodurch das definierte Potential der Kapselung der gasisolierten Schaltanlage an das Feldsteuerelement gelegt wird.

Die Leitfähigkeit des Epoxidharzes für die Feldsteuerelemente wird mittels in das Epoxidharz gemischten leitfähigen Partikeln erreicht. Die leitfähigen Partikel liegen ungeordnet an der Oberfläche der Steuerelektrode, und obwohl sie vergleichsweise klein ausgebildet sind, wirken sie als Spitzen, welche sich im elektrischen Feld dielektrisch nachteilig auswirken.

Aus der Offenlegungsschrift DE 3 634 946 A1 ist ein Isolator für die Anwendung in mit Gleichspannung beaufschlagten Anlagen bekannt. Dieser Isolator weist einen die gesamte Isolierdistanz des Isolators überbrückenden, auf die gesamte Oberfläche des Isolators aufgetragenen Überzug auf. Dieser Überzug ist mit Partikeln dotiert, welche eine vergleichsweise sehr geringe elektrische Leitfähigkeit aufweisen. Diese Partikel haben die Aufgabe, einen bestimmten Oberflächenwiderstand des Überzugs zu gewährleisten, durch den sichergestellt wird, dass die auf der Oberfläche sich ausbildenden Ladungen abfliessen können. Derartige Oberflächenladung führen, wenn sie zu gross werden, zu Verzerrungen des Feldverlaufs und damit verbunden zu hohen lokalen Feldstärken, welche einen Oberflächenüberschlag, d.h. einen Überschlag entlang der Oberfläche des Isolators einleiten können.

Aus der Schrift US 4,418,240 ist bekannt die elektrische Leitfähigkeit einer Hochspannungs durchführung dadurch zu verändern, dass bei konstanter Partikelgrösse die Anzahl der Partikel in der kunststoffmatrix verändert wird, oder dass bei konstanter Anzahl der Partikel in der kunststoffmatrix die Partikelgrösse verändert wird.

### DARSTELLUNG DER ERFINDUNG

Die Erfindung, wie sie im unabhängigen Anspruch gekennzeichnet ist, löst die Aufgabe, einen Isolator zu schaffen, der mit dielektrisch besonders günstig ausgebildeten Steuerelektroden versehen ist.

Die durch die Erfindung erreichten Vorteile sind im wesentlichen darin zu sehen, dass die in die Steuerelektrode eingelagerten, etwas grobkörniger ausgebildeten, elektrisch leitenden Füllstoffe im Bereich der Oberfläche der Elektrode keine dielektrische Spitzenwirkung ausüben können. Die Oberfläche der Elektrode wirkt, dank der fein verteilten, sehr feinkörnig ausgebildeten Russpartikel, die teilweise Ketten gebildet haben, dielektrisch annähernd glatt, sodass die dielektrische Festigkeit des Stützisolators vorteilhaft erhöht wird.

Als besonders vorteilhaft erweist es sich, dass die Elektrode hier als geschlossener, einfach herzustellender und vergleichsweise einfach weiter zu verarbeitender Ring ausgeführt ist. Ablösungen des Giessharzes des Isolatorkörpers von der Giessharzmatrix der Elektrode können hier keinesfalls auftreten, da das Kunststoffmaterial der Elektrode und das Kunststoffmaterial des Isolatorkörpers keine unterschiedlichen Wärmeausdehnungskoeffizienten aufweisen, zudem ist eine gute chemische Bindung zwischen der Elektrode und dem Isolatorkörper gewährleistet. Der so entstandene Isolator ist dielektrisch und mechanisch besonders widerstandsfähig.

Die vergleichsweise gute elektrische Leitfähigkeit der Elektrode hat zur Folge, dass die Feldsteuerung, die mit Hilfe der Elektrode erreicht wird, auch im Bereich hoher Frequenzen der den Stützisolator beaufschlagenden Spannung voll wirksam ist. Es werden mit diesem Stützisolator Frequenzen bis zum Bereich oberhalb von 100 MHz einwandfrei beherrscht.

Das für die Elektrode des beschriebenen Isolators verwendete, elektrisch leitfähige Material kann sehr vorteilhaft auch bei Durchführungen, bei Kabelmuffen und in sonstigen, dielektrisch ähnlich beanspruchten Baugruppen eingesetzt werden. Die Formgebung der elektrisch leitenden Kunststoffbauteile ist sehr flexibel, sodass diese Teile jeweils mit vergleichsweise geringem Aufwand den an die betreffende Baugruppe gestellten dielektrischen und auch sonstigen Anforderungen optimal angepasst werden können.

Die weiteren Ausgestaltungen der Erfindung sind Gegenstände der abhängigen Ansprüche.

Die Erfindung, ihre Weiterbildung und die damit erzielbaren Vorteile werden nachstehend anhand der Zeichnung, welche lediglich einen Ausführungsweg darstellt, näher erläutert.

### KURZE BESCHREIBUNG DER ZEICHNUNG

Es zeigen:
Fig.1 einen schematisch dargestellten Teilschnitt durch einen zwischen Anschlussflanschen einer gasisolierten Schaltanlage montierten scheibenförmigen Stützisolator,
Fig.2 einen schematisch dargestellten, stark vergrösserten Schnitt durch eine erste Materialprobe,
Fig.3 einen schematisch dargestellten, stark vergrösserten Schnitt durch eine zweite Materialprobe, und
Fig.4 einen schematisch dargestellten, stark vergrösserten Schnitt durch eine dritte Materialprobe.

Alle für das unmittelbare Verständnis der Erfindung nicht erforderlichen Elemente sind nicht dargestellt.

### WEGE ZUR AUSFÜHRUNG DER ERFINDUNG

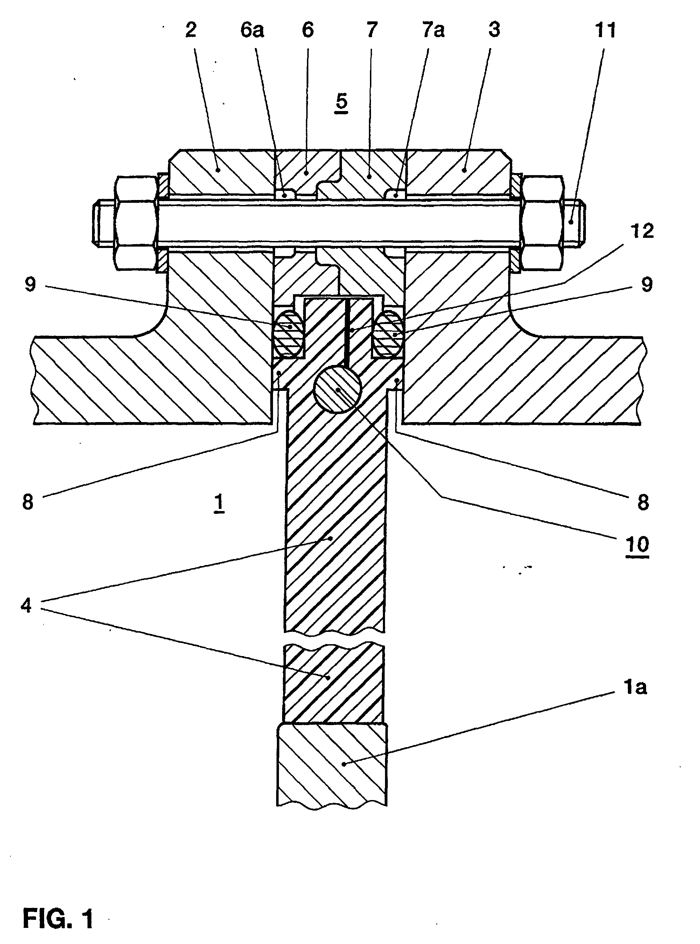

Die Fig.1 zeigt einen schematisch dargestellten Teilschnitt durch einen zwischen Anschlussflanschen 2,3 einer metallgekapselten gasisolierten Schaltanlage montierten scheibenförmigen Stützisolator 1, wie er beispielsweise in diesen Hochspannungsschaltanlagen eingesetzt wird, um die spannungsbeaufschlagten Aktivteile gegen die in der Regel geerdete Kapselung abzustützen. Der Stützisolator 1 weist einen Isolatorkörper 4 aus einem gehärteten Giessharz auf, in den mindestens eine Eingussarmatur 1a aus Metall eingegossen ist. Als Giessharz wird ein anhydridgehärtetes, gefülltes, warm härtendes Epoxidharz eingesetzt, wie beispielsweise EP 402, welches sich besonders für metallgekapselte gasisolierte Schaltanlagen eignet. Die Eingussarmatur 1a ist hier lediglich schematisch dargestellt. Vorzugsweise ist diese Eingussarmatur 1a aus einer Aluminiumlegierung gefertigt und weist eine versilberte Oberfläche auf.

Für eine einpolig metallgekapselte gasisolierte Schaltanlage ist pro Stützisolator 1 eine Eingussarmatur 1a vorgesehen, für eine dreipolig gekapselte gasisolierte Schaltanlage werden pro Stützisolator 1 drei entsprechend der Betriebsspannung der gasisolierten Schaltanlage voneinander beabstandete Eingussarmaturen 1a benötigt. Die Eingussarmatur 1a weist beidseitig jeweils eine Stirnfläche auf, die mit Befestigungsmöglichkeiten für die an sie anzuschliessenden spannungsführenden Aktivteile versehen ist. Derartige Stützisolatoren 1 können auch als Schottungsisolatoren ausgebildet sein, die neben ihrer Funktion als Stützer zudem noch zwei benachbarte Gasräume der gasisolierten Schaltanlage druckdicht voneinander trennen. Sind die Stützisolatoren 1 nicht als Schottungsisolatoren eingesetzt, so sind im Isolatorkörper 4 Durchbrüche vorgesehen, die einen Druckaustausch zwischen den jeweils benachbarten Hohlräumen der gasisolierten Schaltanlage erlauben.

Der hier scheibenförmig ausgebildete Isolatorkörper 4 wird aussen beispielsweise durch einen zweiteiligen Aussenring 5 in radialer Richtung positioniert. Der Aussenring 5 ist aus zwei metallischen Ringen 6,7 zusammengesetzt, die flächig aufeinander liegen und welche die Anschlussflansche 2,3 elektrisch leitend miteinander verbinden. Die Anschlussflansche 2,3 und die Ringe 6,7 werden durch mit Muttern versehene Gewindebolzen 11 zusammengehalten. Die metallischen Ringe 6,7 weisen umlaufende Nuten 6a,7a auf, die nach dem Einbau des Stützisolators 1 in die Hochspannungsschaltanlage mit Fett gefüllt werden. Der Isolatorkörper 4 kann anstelle einer Scheibenform auch irgendeine andere flächenhafte Ausgestaltung aufweisen, so kann er beispielsweise, wenn ein grösserer Oberflächenkriechweg verlangt wird, auch trichterförmig ausgebildet sein.

Wie ferner aus der Fig.1 zu sehen ist, weist der Isolatorkörper 4 im äusseren Bereich beidseitig einen umlaufenden Anschlag 8 auf, der mit dem jeweiligen Anschlussflansch zusammenwirkt. Zwischen dem Anschlag 8 und einem Bund der Ringe 6,7 ist auf jeder Seite des Stützisolators 1 eine Nut ausgebildet, die für die Aufnahme einer Rundschnurdichtung 9 vorgesehen ist. Der Isolatorkörper 4 weist in seinem Innern im Bereich zwischen den Anschlägen 8 eine Elektrode 10 mit einem kreisförmigen Querschnitt auf. Diese Elektrode 10 liegt auf dem Potential der Anschlussflansche 2,3 mit denen sie über den Aussenring 5 elektrisch leitend in Kontakt steht. Bei metallgekapselten gasisolierten Hochspannungsschaltanlagen ist das Potential der Anschlussflansche 2,3 in der Regel das Erdpotential.

Die Elektrode 10 ist hier als ein ringförmiges Feldsteuerelement beispielsweise mit kreisförmigem Querschnitt ausgebildet, wie dies in der Fig.1 dargestellt ist. Es ist jedoch auch möglich, die Elektrode 10 mit einem elipsenförmigen Querschnitt zu versehen. Die Elektrode 10 kann die gleiche Giessharzmatrix aufweisen wie der Isolatorkörper 4. Als Giessharz wird vorteilhaft ein anhydridgehärtetes, gefülltes, warm härtendes Epoxidharz verwendet. Die Elektrode 10 kann aber auch eine Giessharzmatrix aus einem anderen Isoliermaterial aufweisen, der Ausdehnungskoeffizient dieses Isoliermaterials muss allerdings dem des Isolatorkörpers 4 angeglichen sein, um mechanische Spannungen zwischen dem Isolatorkörper 4 und der Elektrode 10 zu vermeiden, welche die mechanische und die dielektrische Festigkeit des Stützisolators 1 negativ beeinflussen könnten. Zudem muss dieses andere Isoliermaterial gut am Material des Isolatorkörpers 4 haften, damit keine dielektrisch schädlichen Hohlräume entstehen können.

Wie die Fig.2 schematisch zeigt, sind in der Giessharzmatrix 13 der Elektrode 10 pulverförmige, elektrisch leitende, vergleichsweise grobkörnige Nickelflakes 14 und vergleichsweise feinkörnige elektrisch leitende Russpartikel 15 eingelagert. Durch diese Einlagerungen wird die elektrische Leitfähigkeit der Elektrode 10 erhöht. Der grobkörnigere Füllstoff bildet ein Gerüst, welches die elektrische Leitfähigkeit der Elektrode 10 gewährleistet, während der feinkörnigere Füllstoff die elektrische Leitfähigkeit weiter verbessert und zusätzlich die Ecken und Kanten dieses Gerüstes dielektrisch glättet, sodass die Oberfläche der Elektrode 10 als dielektrisch glatt anzusehen ist. Die Nickelflakes 14 weisen eine Teilchengrösse von 2 µm bis etwa 100 µm auf, wobei die grösste Fraktion der Nickelflakes 14 eine Teilchengrösse im Bereich um 30 µm aufweist. Die Russpartikel 15 weisen eine Teilchengrösse von etwa 5 nm bis 1 µm auf. Die elektrisch leitenden Russpartikel sind sehr gleichmässig in der Giessharzmatrix 13 verteilt, sodass in der Nähe der Elektrodenoberfläche liegende Nickelflakes 14, die teilweise als dielektrisch ungünstig gestaltete Spitzen wirken könnten, von diesen elektrisch leitenden Russpartikeln 15 umgeben sind, die Spitzenwirkung der Nickelflakes 14 wird durch diese kleinen Russpartikel 15 unwirksam gemacht. Die durch die Russpartikel 15 in dielektrischer Hinsicht geglättete Oberfläche der Elektrode 10 erhöht die dielektrische Festigkeit des Stützisolators 1 vorteilhaft. Die Russpartikel 15 lagern sich beim Mischen aneinander an, wodurch feinste kettenförmige, elektrisch gut leitende Gebilde entstehen, welche zusätzlich die elektrische Leitfähigkeit der Elektrode 10 vorteilhaft erhöhen.

Auf der unteren Seite der in Fig.2 dargestellten Materialprobe ist eine Giesshaut 16 dargestellt, wie sie die frisch gegossene Elektrode 10 umgibt. Diese Giesshaut 16 wird vor dem weiteren Verarbeiten der Elektrode 10, d.h. vor dem Eingiessen derselben in den Isolatorkörper 4, mittels Kugelstrahlen oder Schleifen aufgerauht, wodurch eine bessere Haftung zwischen der Elektrode 10 und dem Isolatorkörper 4 erreicht wird. Bei dieser Nacharbeit wird darauf geachtet, dass keine Nickelflakes 14 freigelegt werden, da freigelegte, also nicht mehr von Russpartikeln 15 abgeschirmte Nickelflakes 14, dielektrisch als Spitzen wirken würden.

Die Form der der Eingussarmatur 1a zugewandten Seite der Elektrode 10 ist für deren dielektrische Wirksamkeit ausschlaggebend. Es sind daher neben dem kreisringförmigen auch andere Elektrodenquerschnitte möglich, wenn darauf geachtet wird, dass die der Eingussarmatur 1a zugewandte Oberfläche der Elektrode 10 konvex ausgebildet ist und keine sich dielektrisch ungünstig auswirkenden Ecken oder Kanten aufweist. Die Elektrode 10 kann beispielsweise einen Querschnitt aufweisen, der einem U-Profil entspricht, dessen Schenkel auf der der Eingussarmatur 1a abgewandten Seite der Elektrode 10 liegen. Eine weitere, einfach herzustellende Elektrodenvariante ergibt sich, wenn statt des U-Profils eine massive ringförmig ausgebildete Elektrode 10 mit einem halbkreisförmigen Querschnitt verwendet wird, dessen der Eingussarmatur 1a zugewandte Oberfläche konvex ausgebildet ist.

Die Elektrode 10 ist elektrisch leitend mit den Ringen 6,7 und damit mit dem Potential der Anschlussflansche 2,3 verbunden. Diese Verbindung wird durch elektrisch leitende Verbindungsteile 12 hergestellt, wie in der Fig.1 dargestellt.

Die Verbindungsteile 12 sind auf eine der bekannten Arten mit den metallischen Ringen 6,7 flexibel verbunden. In der Regel werden mehrere dieser Verbindungsteile 12 verteilt auf dem Umfang der Elektrode 10 angebracht. Die Verbindungsteile 12 werden vorteilhaft so ausgebildet, dass sie während des Giessvorgangs und während des nachfolgenden Aushärtens des Isolatorkörpers 4 als mechanische Halterung der Elektrode 10 dienen können.

Der Bereich um die Eingussarmatur 1a kann mit einer weiteren Elektrode versehen sein, die ähnlich wie die beschriebene Elektrode 10 ausgebildet ist und auch ähnlich wirkt. Nachfolgend wird jedoch nur der Aufbau der Elektrode 10 beschrieben.

### 1. Ausführungsbeispiel:

Die Fig.2 zeigt einen schematisch dargestellten, stark vergrösserten Schnitt durch eine diesem Ausführungsbeispiel entsprechende Materialprobe.

Die Giessharzmatrix 13 der Elektrode 10 wird aus Araldit CY 225 (Araldit ist ein eingetragenes Warenzeichen der Firma CIBA-GEIGY) und einem Härter HY 925 der Firma CIBA-GEIGY gemischt, und zwar werden 100 Gewichtsteile Araldit CY 225 mit 80 Gewichtsteilen Härter HY 925 gemischt. Diesem Gemisch werden 220 Gewichtsteile eines Pulvers aus Nickelflakes HCA-1 beigemischt. Die elektrisch leitenden Nickelflakes HCA-1 werden von der Firma Novamet Specialty Products Corporation, 10 Lawlins Park, Wyckhoff, NJ 07481, mit den bereits beschriebenen Teilchengrössen hergestellt. Ferner werden diesem Gemisch 5 Gewichtsteile Russ CONDUCTEX 975 mit den bereits beschriebenen Teilchengrössen beigemischt, wie ihn die Firma Columbian Chemicals Company, 1600 Parkwood Circle, Atlanta, Georgia 30339, liefert.

Aus diesem giessfähigen Gemisch wird mit Hilfe einer Giessform der Rohling der Elektrode 10 gegossen. Das Aushärten erfolgt in bekannter Weise bei erhöhter Temperatur, wobei sich eine Giesshaut 16 ausbildet, welche die Elektrode 10 einhüllt. Nach der Entnahme des abgekühlten Rohlings aus der Giessform wird dieser kugelgestrahlt, die Oberfläche der elektrisch leitenden Giesshaut 16 wird dadurch aufgerauht. Nach einem Entfettungsvorgang wird die Elektrode 10 in bekannter Weise in den Isolatorkörper 4 eingegossen.

### 2. Ausführungsbeispiel:

Die Fig.3 zeigt einen schematisch dargestellten, stark vergrösserten Schnitt durch eine diesem Ausführungsbeispiel entsprechende Materialprobe.

Die Giessharzmatrix 13 der Elektrode 10 wird aus Araldit CY 225 (Araldit ist ein eingetragenes Warenzeichen der Firma CIBA-GEIGY) und einem Härter HY 925 der Firma CIBA-GEIGY gemischt, und zwar werden 100 Gewichtsteile Araldit CY 225 mit 80 Gewichtsteilen Härter HY 925 gemischt. Diesem Gemisch werden 100 Gewichtsteile eines Pulvers aus Nickelflakes HCA-1 beigemischt. Die elektrisch leitenden Nickelflakes HCA-1 werden von der Firma Novamet Specialty Products Corporation, 10 Lawlins Park, Wyckhoff, NJ 07481, mit den bereits beschriebenen Teilchengrössen hergestellt. Zudem werden dem Gemisch 450 Gewichtsteile von sphärisch ausgebildeten Nickelpartikeln 17 beigemischt. Diese sphärisch ausgebildeten Nickelpartikel 17 weisen eine Teilchengrösse von 20 µm bis 120 µm auf, wobei die grösste Fraktion dieser Partikel eine Teilchengrösse im Bereich um 60 µm aufweist. Ferner werden diesem Gemisch 4 Gewichtsteile Russ CONDUCTEX 975 mit den bereits beschriebenen Teilchengrössen beigemischt, wie ihn die Firma Columbian Chemicals Company, 1600 Parkwood Circle, Atlanta, Georgia 30339, liefert.

Dieses giessfähige Gemisch wird weiter verarbeitet, wie dies beim ersten Ausführungsbeispiel beschrieben ist.

### 3. Ausführungsbeispiel:

Die Fig.4 zeigt einen schematisch dargestellten, stark vergrösserten Schnitt durch eine diesem Ausführungsbeispiel entsprechende Materialprobe.

Die Giessharzmatrix 13 der Elektrode 10 wird aus Araldit CY 225 (Araldit ist ein eingetragenes Warenzeichen der Firma CIBA-GEIGY) und einem Härter HY 925 der Firma CIBA-GEIGY gemischt, und zwar werden 100 Gewichtsteile Araldit CY 225 mit 80 Gewichtsteilen Härter HY 925 gemischt. Diesem Gemisch werden 600 Gewichtsteile von sphärisch ausgebildeten Nickelpartikeln 17 beigemischt. Diese sphärisch ausgebildeten Nickelpartikel 17 weisen eine Teilchengrösse von 20 µm bis 120 µm auf, wobei die grösste Fraktion dieser Partikel eine Teilchengrösse im Bereich um 60 µm aufweist. Ferner werden diesem Gemisch 8 Gewichtsteile Russ CONDUCTEX 975 mit den bereits beschriebenen Teilchengrössen beigemischt, wie ihn die Firma Columbian Chemicals Company, 1600 Parkwood Circle, Atlanta, Georgia 30339, liefert.

Dieses giessfähige Gemisch wird weiter verarbeitet, wie dies beim ersten Ausführungsbeispiel beschrieben ist.

### 4. Ausführungsbeispiel:

Die Fig.2 zeigt einen schematisch dargestellten, stark vergrösserten Schnitt durch eine diesem Ausführungsbeispiel in etwa entsprechende Materialprobe. Dieses Material ist besonders für Baugruppen, welche für eine Freiluftaufstellung vorgesehen sind, geeignet.

Die Giessharzmatrix 13 der Elektrode 10 wird aus Araldit CY 184 (Araldit ist ein eingetragenes Warenzeichen der Firma CIBA-GEIGY) und einem Härter HY 1102 der Firma CIBA-GEIGY gemischt, und zwar werden 100 Gewichtsteile Araldit CY 184 mit 90 Gewichtsteilen Härter HY 1102 gemischt. Diesem Gemisch werden 250 Gewichtsteile eines Pulvers aus Nickelflakes HCA-1 beigemischt. Die elektrisch leitenden Nickelflakes HCA-1 werden von der Firma Novamet Specialty Products Corporation, 10 Lawlins Park, Wyckhoff, NJ 07481, mit den bereits beschriebenen Teilchengrössen hergestellt. Ferner werden diesem Gemisch 6 Gewichtsteile Russ CONDUCTEX 975 mit den bereits beschriebenen Teilchengrössen beigemischt, wie ihn die Firma Columbian Chemicals Company, 1600 Parkwood Circle, Atlanta, Georgia 30339, liefert.

Dieses giessfähige Gemisch wird weiter verarbeitet, wie dies beim ersten Ausführungsbeispiel beschrieben ist.

Die Elektrode 10 kann auch aus anderen Materialien gefertigt werden, wobei jedoch stets darauf geachtet werden muss, dass der Ausdehnungskoeffizient der Elektrode 10 dem Ausdehnungskoeffizienten des jeweiligen Isolatorkörpers 4 angeglichen sein muss. Als Material für die Giessharzmatrix 13 können Duromere, Thermoplaste, Elastomere oder intrinsisch leitfähige Kunststoffe, wie beispielsweise Polypyrole, verwendet werden. Es ist auch vorstellbar, die Giessharzmatrix durch giessbare Keramiken zu ersetzen. Als etwas groberer Füllstoff können ausser den Nickelflakes oder in Kombination mit diesen auch Stahlflakes oder Messingflakes oder versilberte Kupferflakes oder sphärisch ausgebildete Nickelpartikel eingesetzt werden oder auch Partikel von TiC, TiB₂, Cu und Cu-Legierungen. Diese Partikel können auch in Faserform verwendet werden, wobei die Flakes oder die Fasern zusätzlich mit Hilfe von beigemischten, niedrig schmelzenden Lotpartikeln lokal verbunden werden können. Als feinkörnigerer Füllstoff können ausser dem Russ oder in Kombination mit ihm halbleitende oder leitende Nanopartikel wie beispielsweise SnO₂, ZnO, SiC, RuO₂, Fe₃O₄, Si, TiB₂, diverse Metalle oder Polyanilin verwendet werden. Ferner ist es denkbar, in Kombination oder allein, auch Füllstoffe mit dielektrischen Eigenschaften in Nanopartikelgrösse wie TiO₂, BaTiO₃, und TiOₓ einzusetzen. Die Nanopartikel weisen dabei eine Teilchengrösse im Bereich von 1 nm bis 500 oder 1000 nm auf. Die Füllstoffe TiO₂, BaTiO₃, und TiOₓ weisen eine vergleichsweise hohe Dielektrizitätszahl auf, sodass mit ihrer Hilfe die auf der Elektrode 10 im Bereich der Spitzen des leitenden Gerüsts, also im Mikrobereich, sich ausbildenden Ladungen kapazitiv abgebaut werden können, sodass das elektrische Feld lokal geglättet wird.

Weitere Füllstoffe können zudem beigemischt werden, um die Eigenschaften des Isolators den jeweils gestellten Anforderungen anzupassen. Um die mechanische Festigkeit von Isolatoren und Elektroden zu erhöhen, werden üblicherweise auch Quarzpartikel und/oder Korundpartikel als Füllstoff beigemischt. Die Quarzpartikel und/oder Korundpartikel können auch dafür verwendet werden, unterschiedliche Ausdehnungskoeffizienten bei Elektrode und Isolatorkörper einander anzugleichen. Ferner kann auch die Viskosität der Giessharzmatrix 13 mittels Füllstoffen optimiert werden, um eine gute Vergiessbarkeit derselben zu erreichen.

Zur Erläuterung der Wirkungsweise werden nun die Figuren etwas näher betrachtet. Am scheibenförmigen Stützisolator 1 treten im Betrieb thermische, mechanische und elektrische Belastungen auf. Diese Belastungen werden zum einen dadurch hervorgerufen, dass sich die Eingussarmatur auf Hochspannungspotential befindet, und dass sie und die an sie angeschlossenen Aktivteile hohe Ströme führen, zum anderen auch dadurch, dass bei als Schottisolatoren ausgebildeten Stützisolatoren 1 in den an diese angrenzenden Gasräumen der gasisolierten Schaltanlage häufig unterschiedliche Gasdrücke herrschen. Durch die hohen Ströme wird der Stützisolator 1 erwärmt. Hierdurch wie auch durch die unterschiedlichen Drücke des Isoliergases in den verschiedenen Gasräumen treten mechanische Spannungen im Stützisolator 1 auf. Insbesondere an Stellen, an denen-Kraft in den Stützisolator 1 eingeleitet wird, d.h. sowohl im Bereich um die Anschläge 8 als auch im Bereich um die Eingussarmatur 1a herum, treten erhebliche mechanische Spannungen auf. Zugleich belastet das elektrische Feld zwischen den mit der Eingussarmatur 1a verbundenen Aktivteilen und der Metallkapselung den Stützisolator 1 stark. Von den mechanisch besonders belasteten Stellen im Bereich um die Anschläge 8 hält die im Bereich der Anschlussflansche 2,3 vorgesehene Elektrode 10 das elektrische Feld fern, was sich auf die Dauerstandsfestigkeit des Stützisolators 1 positiv auswirkt.

Die Elektrode 10 ist hier als geschlossener, einfach herzustellender und vergleichsweise einfach weiter zu verarbeitender Ring ausgeführt. Ablösungen des Giessharzes des Isolatorkörpers 4 von der Elektrode 10 können hier mit grosser Sicherheit nicht auftreten, da das Material der Elektrode 10 und das Material des Isolatorkörpers 4 keine unterschiedlichen Wärmeausdehnungskoeffizienten aufweisen und da hier zudem auch eine gute chemische Bindung vorliegt.

Die gute elektrische Leitfähigkeit der Elektrode 10 hat zur Folge, dass die Feldsteuerung, die mit Hilfe der Elektrode 10 erreicht wird, auch im Bereich hoher Frequenzen der den Stützisolator 1 beaufschlagenden Spannung voll wirksam ist. Es sind Frequenzen bis zum Bereich oberhalb von 100 MHz beherrschbar. Dadurch wird auch der zusätzliche Einsatz dieser Elektrode 10 als Teil eines Sensors für die Überwachung der gasisolierten Schaltanlage möglich. Insbesondere ist dabei an die zusätzliche Verwendung der Elektrode 10 als eine Elektrode eines einfach zu erstellenden Teilentladungsdetektors vorstellbar. Die elektrische Leitfähigkeit der beigemischten Füllstoffe ist in einem Frequenzbereich von etwa 100 Hz bis > 1 MHz stabil. Wenn die Elektrode 10 als Elektrode eines Teilentladungsdetektors verwendet werden soll, so kann es vorteilhaft sein, in diesem Fall den Isolatorkörper 4 so auszubilden, dass er die Elektrode 10 nicht vollständig umschliesst.

Der grobkörnigere elektrisch leitende Füllstoff bildet ein Gerüst, welches die elektrische Leitfähigkeit der Elektrode 10 gewährleistet, während der feinkörnigere elektrisch leitende Füllstoff die Ecken und Kanten dieses Gerüstes dielektrisch glättet, sodass die Oberfläche der Elektrode 10 als dielektrisch glatt anzusehen ist.

### BEZEICHNUNGSLISTE

- 1: Stützisolator
- 1a: Eingussarmatur
- 2,3: Anschlussflansch
- 4: Isolatorkörper
- 5: Aussenring
- 6,7: Ringe
- 6a,7a: Nuten
- 8: Anschlag
- 9: Rundschnurdichtung
- 10: Elektrode
- 11: Gewindebolzen
- 12: Verbindungsteile
- 13: Giessharzmatrix
- 14: Nickelflakes
- 15: Russpartikel
- 16: Giesshaut
- 17: sphärisch ausgebildete Nickelpartikel

## Patentansprüche

1. Isolator für den Einbau in eine Hochspannungsschaltanlage, mit einem Isolatorkörper (4) aus gehärtetem Giessharz und mit mindestens einer mit Hochspannung beaufschlagten, in den Isolatorkörper (4) eingegossenen, metallischen Eingussarmatur (la), mit mindestens einer in den Isolatorkörper (4) eingegossenen, elektrisch leitenden Elektrode (10), mit Verbindungsteilen (12), welche für die elektrische Verbindung der mindestens einen
Elektrode (10) mit jeweils einem entsprechend zugeordneten Potential vorgesehen sind,
wobei die mindestens eine in den Isolatorkörper (4) eingegossene Elektrode (10) aus einem giessbaren Formstoff gefertigt ist, **dadurch gekennzeichnet,**
- **dass** in diesen Formstoff mindestens zwei unterschiedliche, elektrisch leitende Füllstoffe eingelagert sind, die zueinander unterschiedliche Korngrössen aufweisen,
- **dass** der grobkörnigere Füllstoff ein Gerüst bildet, welches die elektrische Leitfähigkeit der Elektrode (10) gewährleistet, während der feinkörnigere Füllstoff die elektrische Leitfähigkeit weiter verbessert und zusätzlich die Ecken und Kanten dieses Gerüstes dielektrisch glättet.

2. Isolator nach Anspruch 1, **dadurch gekennzeichnet,**
- **dass** als grobkörniger elektrisch leitender Füllstoff Nickelflakes (14) oder sphärisch ausgebildete Nickelpartikel (17) oder eine Mischung beider vorgesehen ist, und
- **dass** als feinkörniger elektrisch leitender Füllstoff Russpartikel (15) vorgesehen sind.

3. Isolator nach Anspruch 2, **dadurch gekennzeichnet,**
- **dass** die Nickelflakes (14) eine Teilchengrösse im Bereich von 2 µm bis 100 µm aufweisen, wobei die grösste Fraktion dieser Nickelflakes (14) eine Teilchengrösse im Bereich um 30 µm aufweist, und
- **dass** die Russpartikel (15) eine Teilchengrösse im Bereich von 5 nm bis 1 µm aufweisen.

4. Isolator nach Anspruch 2, **dadurch gekennzeichnet,**
- **dass** die sphärisch ausgebildeten Nickelpartikel (17) eine Teilchengrösse von 20 µm bis 120 µm aufweisen, wobei die grösste Fraktion dieser Partikel eine Teilchengrösse im Bereich um 60 µm aufweist, und
- **dass** die Russpartikel (15) eine Teilchengrösse im Bereich von 5 nm bis 1 µm aufweisen.

5. Isolator nach einem der Ansprüche 1 bis 4, **dadurch gekennzeichnet,**
- **dass** der Formstoff eine Giessharzmatrix (13) aufweist, und
- **dass** diese Giessharzmatrix (13) der Elektrode (10) entweder aus dem gleichen Isoliermaterial besteht wie der Isolatorkörper (4) oder aus einem Isoliermaterial dessen Ausdehnungskoeffizient dem des Isoliermaterials des Isolatorkörpers (4) angeglichen ist.

6. Isolator nach einem der Ansprüche 1 bis 5, **dadurch gekennzeichnet,**
- **dass** die Elektrode (10) kreisringförmig ausgebildet ist, und
- **dass** dieser Ring einen kreisförmigen oder einen elliptischen Querschnitt aufweist.

7. Isolator nach einem der Ansprüche 1 bis 5, **dadurch gekennzeichnet,**
- **dass** die Elektrode (10) einen Querschnitt aufweist, der einem U-Profil entspricht, dessen Schenkel auf der der Eingussarmatur (1a) abgewandten Seite der Elektrode (10) liegen.

8. Isolator nach einem der Ansprüche 1 bis 7, **dadurch gekennzeichnet,**
- **dass** der Isolator als Stützisolator (1) ausgebildet ist, der bei metallgekapselten gasisolierten Schaltanlagen zwischen Anschlussflanschen (2,3) montiert ist, und
- **dass** die Elektrode (10) im Bereich der Anschlussflansche (2,3) angeordnet ist.

9. Isolator nach Anspruch 1, **dadurch gekennzeichnet,**
- **dass** als feinkörniger Füllstoff elektrisch leitende oder halbleitende Nanopartikel wie RuO₂, TiB₂, Pb-Sn Lot, ZnO, SnO₂, SiC, Fe₃O₄, Si und CdS eingesetzt werden.

10. Isolator nach Anspruch 1, **dadurch gekennzeichnet,**
- **dass** als feinkörniger elektrisch leitender Füllstoff Nanopartikel mit hoher Dielektrizitätszahl wie TiO₂, BaTiO₃ und TiOₓ eingesetzt werden.

11. Isolator nach einem der voranstehenden Ansprüche, **dadurch gekennzeichnet,**
- **dass** als feinkörniger elektrisch leitender Füllstoff Nanopartikel mit hoher Dielektrizitätszahl wie TiO₂, BaTiO₃ und TiOₓ in Verbindung mit elektrisch leitenden Russpartikeln (15) oder elektrisch leitenden oder halbleitenden Nanopartikel wie RuO₂, TiB₂, Pb-Sn Lot, ZnO, SnO₂, SiC, Fe₃O₄, Si und CdS eingesetzt werden.

## Claims

1. Insulator for installation in a high-voltage switching installation, with an insulator body (4) of cured casting resin and with at least one metallic cast-in fitting (1a), which is subjected to high voltage and is cast into the insulating body (4), with at least one electrically conducting electrode (10), which is cast into the insulator body (4), with connecting parts (12), which are provided with a correspondingly assigned potential in each case for the electrical connection of the at least one electrode (10), the at least one electrode (10) cast into the insulator body (4) being produced from a castable moulding material, **characterized**
- **in that** at least two different, electrically conducting fillers, which have grain sizes which are different from one another, are incorporated into this moulding material,
- **in that** the coarser-grained filler forms a framework which ensures the electrical conductivity of the electrode (10), while the finer-grained filler further improves the electrical conductivity and, in addition, dielectrically smooths the corners and edges of this framework.

2. The insulator according to Claim 1, **characterized**
- **in that** nickel flakes (14) or spherically formed nickel particles (17) or a mixture of the two is provided as the coarse-grained electrically conducting filler, and
- **in that** carbon black particles (15) are provided as the fine-grained electrically conducting filler.

3. Insulator according to Claim 2, **characterized**
- **in that** the nickel flakes (14) have a particle size in the range from 2 µm to 100 µm, the largest fraction of these nickel flakes (14) having a particle size in the range around 30 µm, and
- **in that** the carbon black particles (15) have a particle size in the range from 5 nm to 1 µm.

4. Insulator according to Claim 2, **characterized**
- **in that** the spherically formed nickel particles (17) have a particle size of from 20 µm to 120 µm, the largest fraction of these particles having a particle size in the range around 60 µm, and
- **in that** the carbon black particles (15) have a particle size in the range from 5 nm to 1 µm.

5. Insulator according to one of Claims 1 to 4, **characterized**
- **in that** the moulding material has a casting resin matrix (13), and
- **in that** this casting resin matrix (13) of the electrode (10) consists either of the same insulating material as the insulator body (4) or of an insulating material of which the coefficient of expansion is made similar to that of the insulating material of the insulator body (4).

6. Insulator according to one of Claims 1 to 5, **characterized**
- **in that** the electrode (10) is of an annular form, and
- **in that** this ring has a circular or elliptical cross section.

7. Insulator according to one of Claims 1 to 5, **characterized**
- **in that** the electrode (10) has a cross section which corresponds to a U profile, the legs of which lie on the side of the electrode (10) facing away from the cast-in fitting (1a).

8. Insulator according to one of Claims 1 to 7, **characterized**
- **in that** the insulator is designed as a supporting insulator (1) which is mounted between connection flanges (2, 3) in metal-enclosed gas-insulated switching installations, and
- **in that** the electrode (10) is arranged in the region of the connection flanges (2, 3).

9. Insulator according to Claim 1, **characterized**
- **in that** electrically conducting or semiconducting nano particles, such as RuO₂, TiB₂ , Pb-Sn solder, ZnO, SnO₂, SiC, Fe₃O₄, Si and CdS, are used as the fine-grained filler.

10. Insulator according to Claim 1, **characterized**
- **in that** nano particles with a high dielectric constant, such as TiO₂, BaTiO₃ and TiOₓ, are used as the fine-grained electrically conducting filler.

11. Insulator according to one of the preceding claims, **characterized**
- **in that** nano particles with a high dielectric constant, such as TiO₂, BaTiO₃ and TiOₓ, in combination with electrically conducting carbon black particles (15) or electrically conducting or semiconducting nano particles, such as RuO₂, TiB₂ , Pb-Sn solder, ZnO, SnO₂, SiC, Fe₃O₄, Si and CdS, are used as the fine-grained filler.

## Revendications

1. Isolateur conçu pour être installé dans un équipement de commutation à haute tension, comprenant un corps d'isolateur (4) en résine moulée durcie et comprenant au moins une armature de moulage (1a) métallique exposée à la haute tension et moulée dans le corps de l'isolateur (4), comprenant au moins une électrode (10) conductrice d'électricité moulée dans le corps de l'isolateur (4), comprenant des pièces de liaison (12) qui sont prévues pour la liaison électrique de l'au moins une électrode (10) avec à chaque fois un potentiel associé correspondant, l'au moins une électrode (10) moulée dans le corps de l'isolateur (4) étant fabriquée dans un demi-produit moulé pouvant être moulé, **caractérisé en ce**
- **qu'**au moins deux matériaux de remplissage différents conducteurs d'électricité et présentant des granularités différentes l'un par rapport à l'autre sont insérés dans ce demi-produit moulé,
- **que** le matériau de remplissage aux grains les plus gros forme une ossature qui garantit la conductivité électrique de l'électrode (10), alors que le matériau de remplissage ayant les grains les plus fins améliore encore davantage la conductivité électrique et, en plus, assure le lissage diélectrique des coins et des arêtes de cette ossature.

2. Isolateur selon la revendication 1, **caractérisé en ce**
- **que** le matériau prévu comme matériau de remplissage conducteur d'électricité à gros grains est constitué de flocons de nickel (14) ou de particules de nickel de forme sphérique (17) ou d'un mélange des deux, et
- **que** le matériau prévu comme matériau de remplissage conducteur d'électricité à grains fins est constitué de particules de suie (15).

3. Isolateur selon la revendication 2, **caractérisé en ce**
- **que** les flocons de nickel (14) présentent une granularité comprise entre 2 µm et 100 µm, la fraction la plus importante de ces flocons de nickel (14) présentant une granulométrie de l'ordre de 30 µm, et
- **que** les particules de suie (15) présentent une granularité comprise entre 5 nm et 1 µm.

4. Isolateur selon la revendication 2, **caractérisé en ce**
- **que** les particules de nickel (17) de forme sphérique présentent une granularité comprise entre 20 µm et 120 µm, la fraction la plus importante de ces flocons de nickel (14) présentant une granulométrie de l'ordre de 60 µm, et
- **que** les particules de suie (15) présentent une granularité comprise entre 5 nm et 1 µm.

5. Isolateur selon l'une des revendications 1 à 4, **caractérisé en ce**
- **que** le demi-produit moulé présente une matrice en résine moulée (13), et
- **que** cette matrice en résine moulée (13) de l'électrode (10) se compose soit du même matériau isolant que le corps de l'isolateur (4), soit d'un matériau isolant dont le coefficient de dilatation est similaire à celui du matériau isolant du corps de l'isolateur (4).

6. Isolateur selon l'une des revendications 1 à 5, **caractérisé en ce**
- **que** l'électrode (10) est réalisée en forme d'anneau de cercle, et
- **que** cet anneau présente une section circulaire ou elliptique.

7. Isolateur selon l'une des revendications 1 à 5, **caractérisé en ce**
- **que** l'électrode (10) présente une section qui correspond à un profilé en U dont les branches reposent sur le côté de l'électrode (10) qui se trouve à l'opposé de l'armature de moulage (1a).

8. Isolateur selon l'une des revendications 1 à 7, **caractérisé en ce**
- **que** l'isolateur est réalisé sous la forme d'un isolateur support (1) qui est monté entre les brides de raccordement (2, 3) sur les équipements de commutation en blindage métallique à isolement gazeux, et
- **que** l'électrode (10) est disposée dans la zone de la bride de raccordement (2, 3).

9. Isolateur selon la revendication 1, **caractérisé en ce**
- **que** le matériau utilisé comme matériau de remplissage à grains fins est constitué de nanoparticules conductrices d'électricité ou semiconductrices comme le RuO₂, le TiB₂, la brasure Pb-Sn, le ZnO, le SnO₂, le SiC, le Fe₃O₄, le Si et le CdS.

10. Isolateur selon la revendication 1, **caractérisé en ce**
- **que** le matériau utilisé comme matériau de remplissage à grains fins conducteur d'électricité est constitué de nanoparticules à constante diélectrique élevée comme le TiO₂, le BaTiO₃ et le TiOₓ.

11. Isolateur selon l'une des revendications précédentes, **caractérisé en ce**
- **que** le matériau de remplissage à grains fins conducteur d'électricité à constante diélectrique élevée comme le TiO₂, le BaTiO₃ et le TiOₓ est utilisé en combinaison avec des particules de suie (15) conductrices d'électricité ou de nanoparticules conductrices d'électricité ou semiconductrices comme le RuO₂, le TiB₂, la brasure Pb-Sn, le ZnO, le SnO₂, le SiC, le Fe₃O₄, le Si et le CdS.
